# EUROPEAN PATENT SPECIFICATION

(11) **EP 4 216 182 B1**
(45) Date of publication and mention of the grant of the patent: **17.06.2026**
(21) Application number: 22211415.9
(22) Date of filing: 05.12.2022
(51) Int. Cl.: G07G 1/00, G07G 1/12

(54) **READING DEVICE AND SELF-SERVICE POINT-OF-SALES TERMINAL**
LESEVORRICHTUNG UND SELBSTBEDIENUNGSTERMINAL FÜR VERKAUFSSTELLE
DISPOSITIF DE LECTURE ET TERMINAL DE POINT DE VENTE EN LIBRE-SERVICE

(30) Priority: 24.01.2022 JP 2022008627
(43) Date of publication of application: 26.07.2023
(73) Proprietor: Toshiba TEC Kabushiki Kaisha, Tokyo 141-8562 (JP)
(72) Inventor: Kawaguchi, Yuki, Tokyo, 141-8562 (JP)
(74) Representative: Hoffmann Eitle

(56) References cited:
- EP-A1- 3 379 505
- EP-A2- 1 098 281
- US-A1- 2015 112 825
- US-A1- 2018 365 666
- US-A1- 2021 232 820

## Description

### FIELD

Embodiments described herein relate generally to a reading device and a self-service point-of-sales (POS) terminal.

### BACKGROUND

In a case where an item is purchased via a self-checkout lane in a store such as a glossary store or a convenience store, a self-service reading device is used for performing an item registration process. Such a reading device has a scanner that can read a symbol such as a bar code attached to an item taken out from a basket by a customer. The customer operates the scanner to read the symbol to register the item to be purchased.

Since the above-described reading device is operated by the customer, an erroneous or unauthorized action may be performed during the registration process. For example, a fraudulent action such as bagging an item without causing the scanner to read the symbol may be performed. To detect and prevent such an action, a camera for monitoring operations by the customer is attached to the reading device.

It is ideal that the monitoring camera is located at a higher position, e.g., above the scanner in order to capture the entire image of the customer operating the scanner. However, in the conventional configuration, since the monitoring camera is mounted on an arm member or the like, which extends from the back side of the reading device, to capture an image of the front side thereof, there is a possibility that other objects such as a display device located between the monitoring camera and the scanner are imaged. As a result, it is necessary to adjust the position of the monitoring camera and its imaging range so that the monitoring camera can capture an image of the customer and the scanner properly.

US 2015 112 825 A1 describes a checkout station that includes a checkout terminal having a detecting unit at a front surface thereof, and first and second shopping cart parking regions on opposite lateral sides of the checkout terminal.

EP 3 379 505 A1 describes a sales data processing apparatus that includes first and second image-pickup cameras and a processor.

### SUMMARY OF THE INVENTION

Embodiments provide a reading device and a self-service POS terminal capable of efficiently monitoring an operator who operates a scanner thereof. The present invention is defined by the appended independent claims. The dependent claims describe optional features and specific embodiments.

In one embodiment, a reading device includes a first support member extending vertically, a scanner attached to the first support member and including a window facing a first direction and through which an item can be scanned by an operator, an extension member attached to an upper portion of the first support member and extending in the first direction above the scanner, a camera attached to an end of the extension member in the first direction and configured to capture an image of the operator, and a controller configured to issue a notification signal when the controller detects from the captured image that the operator is carrying out a predetermined operation.

One of the objects of the present invention is to improve prior art techniques and overcome at least some of the prior art problems as for instance above illustrated.

According to a first aspect of the invention, it is provided a reading device, comprising a first support member extending vertically; a scanner attached to the first support member and including a window facing a first direction and through which an item can be scanned by an operator; an extension member attached to an upper portion of the first support member and extending in the first direction above the scanner; a camera attached to an end of the extension member in the first direction and configured to capture an image of the operator; and a controller configured to issue a notification signal when the controller detects from the captured image that the operator is carrying out a predetermined operation.

Optionally, the reading device according to the first aspect of the invention further comprises a lamp attached to the first support member at a height lower than the camera and configured to emit light when the notification signal is issued.

Optionally, in the reading device according to the first aspect of the invention, the camera, the lamp, and the scanner are arranged in a straight line.

Optionally, the reading device according to the first aspect of the invention further comprises a display device attached to the first support member between the lamp and the scanner and configured to display identification information of the reading device.

Optionally, in the reading device according to the first aspect of the invention, the first support member has an opening into which a second support member for attaching the display device to the first support member can be inserted.

Optionally, in the reading device according to the first aspect of the invention, the camera is configured to capture an image of the operator, the lamp, and the display device.

Optionally, the reading device according to the first aspect of the invention further comprises a first table on which an item to be scanned by the scanner can be placed; and a second table on which an item that has been scanned by the scanner can be placed.

Optionally, in the reading device according to the first aspect of the invention, the camera is between the first and second tables when viewed from above.

Optionally, in the reading device according to the first aspect of the invention, the first support member includes a pedestal to which a lower end of the extension member is attached by a screw.

Optionally, in the reading device according to the first aspect of the invention, the camera faces downward.

According to a second aspect of the invention, it is provided a self-service point-of-sales (POS) terminal, comprising a first support member extending vertically; a scanner attached to the first support member and including a window facing a first direction and through which an item can be scanned by a customer; an extension member attached to an upper portion of the first support member and extending in the first direction above the scanner; a camera attached to an end of the extension member in the first direction and configured to capture an image of the customer; and a controller configured to register the scanned item for purchase, wherein the controller is further configured to issue a notification signal when the controller detects from the captured image that the customer is carrying out a predetermined operation.

Optionally, the POS terminal according to the second aspect of the invention further comprises a lamp attached to the first support member at a height lower than the camera and configured to emit light when the notification signal is issued.

Optionally, in the POS terminal according to the second aspect of the invention, the camera, the lamp, and the scanner are arranged in a straight line.

Optionally, the POS terminal according to the second aspect of the invention further comprises a display device attached to the first support member between the lamp and the scanner and configured to display identification information of the POS terminal.

Optionally, in the POS terminal according to the second aspect of the invention, the first support member has an opening into which a second support member for attaching the display device to the first support member can be inserted.

Optionally, in the POS terminal according to the second aspect of the invention, the camera is configured to capture an image of the customer, the lamp, and the display device.

Optionally, the POS terminal according to the second aspect of the invention further comprises a first table on which an item to be scanned by the scanner can be placed; and a second table on which an item that has been scanned by the scanner can be placed.

Optionally, the POS terminal according to the second aspect of the invention further comprises a pair of extension bars from which a shopping bag is hung, wherein the camera is configured to capture an image of the customer, the first and second tables, and the shopping bag.

Optionally, the POS terminal according to the second aspect of the invention further comprises a third table above the second table on which an item that has been scanned by scanner can be placed, wherein the extension bars extend from the third table in the first direction.

Optionally, the POS terminal according to the second aspect of the invention further comprises a printer configured print a receipt on which information about the registered item is printed, wherein the third table is between the scanner and the printer.

### BRIEF DESCRIPTION OF THE DRAWINGS

FIG. 1 is a perspective view of a reading device according to an embodiment.
FIG. 2 is a front view of the reading device.
FIG. 3 is a side view of the reading device.
FIG. 4 is a top view of the reading device.
FIGS. 5 and 6 are perspective views of a support member included in the reading device.

### DETAILED DESCRIPTION

Hereinafter, exemplary embodiments will be described with reference to the drawings. In the disclosure, a self-service POS terminal that is operated by a customer will be described as an exemplary reading device. The present invention is not limited to the embodiments described below.

A self-service POS terminal 1 according to an embodiment is installed at a self-checkout lane in a store. A symbol is attached to an item or a container (e.g., a bag, a box, or the like) containing the item displayed and sold at the store. The symbol is coded information and includes information (for example, an item code) for specifying the item to which the symbol is attached. A customer takes a basket at the entrance of the store, and puts an item to be purchased into the basket. The self-service POS terminal 1 is operated by the customer himself/herself to perform an item registration operation by causing the scanner to read the symbol and a payment operation for paying a price for the registered item.

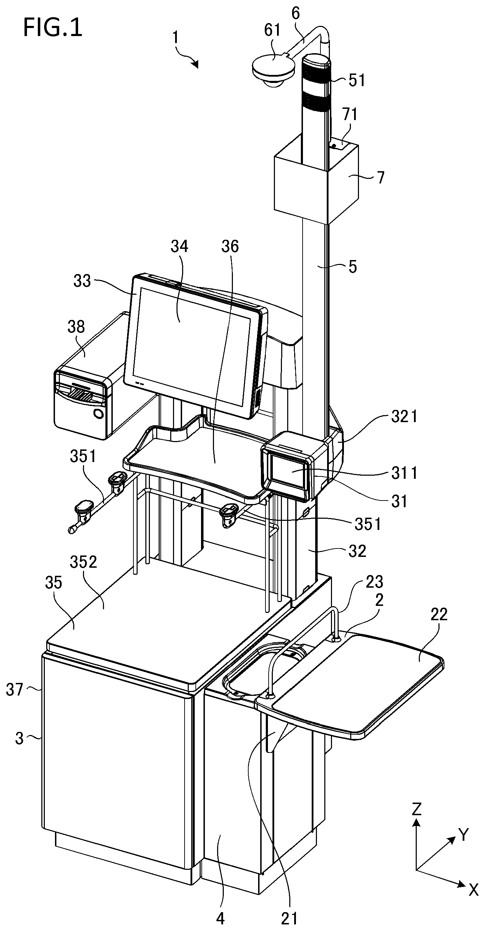

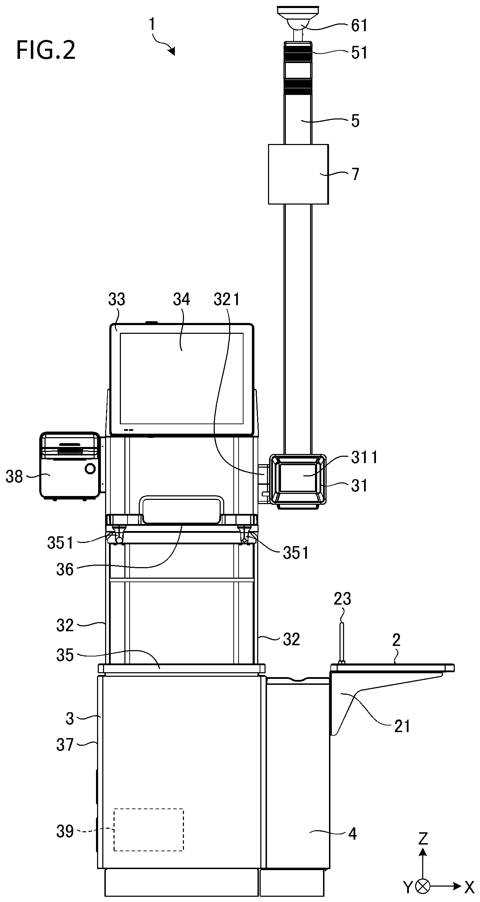

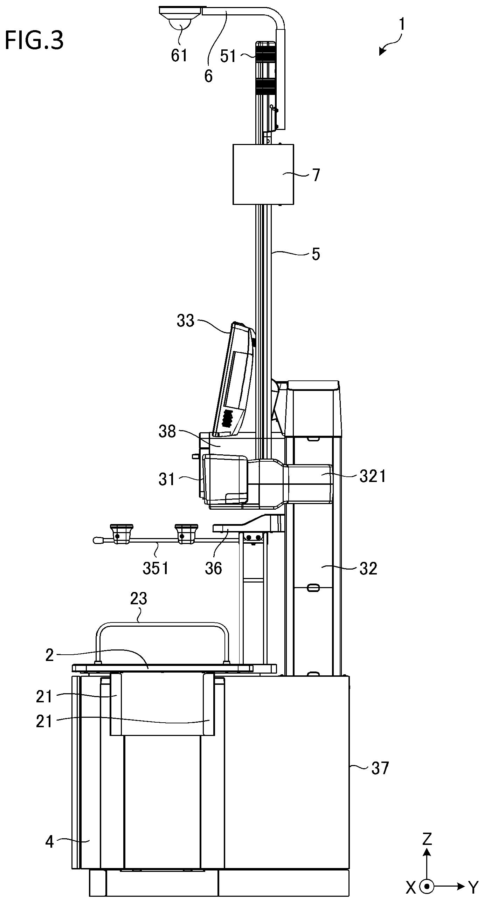

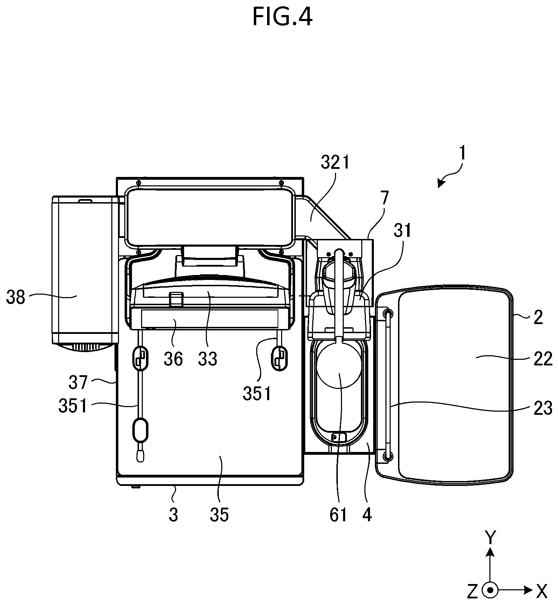

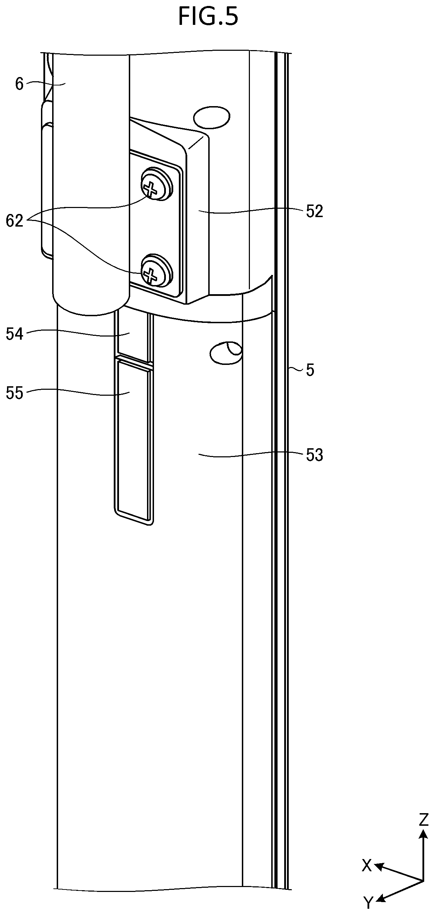

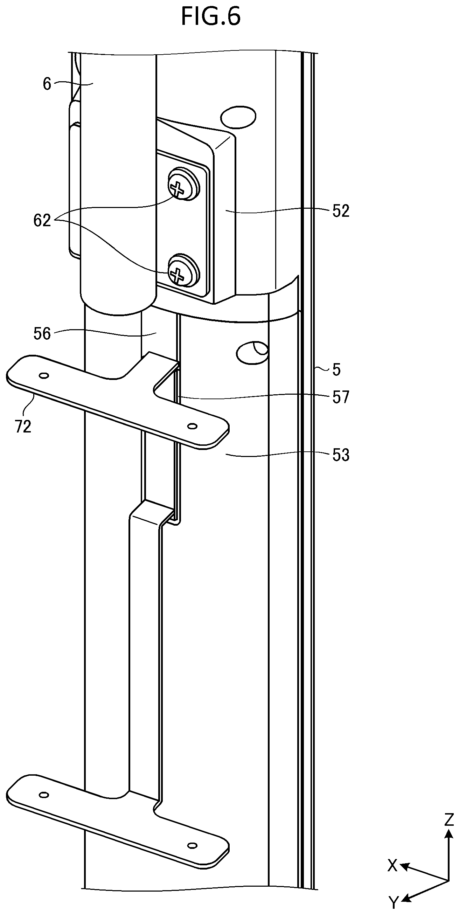

FIG. 1 is a perspective view of the self-service POS terminal 1 according to the present embodiment. FIG. 2 is a front view of the self-service POS terminal 1 according to the present embodiment. FIG. 3 is a side view of the self-service POS terminal 1 according to the present embodiment. FIG. 4 is a top view of the self-service POS terminal 1 according to the present embodiment. FIGS. 5 and 6 are perspective views of a support member included in the self-service POS terminal 1 according to the present embodiment.

Note that, in the drawings described below, the X-axis, the Y-axis, and the Z-axis orthogonal to each other are illustrated for convenience, and the left-right direction, the front-rear direction, and the up-down direction will be referred to as "X direction, " "Y direction, " and "Z direction." In the following description, when the X direction, the Y direction, or the Z direction is simply referred to, the direction means either of the two directions along the axis.

Further, when the positive direction of the X-axis is specified, the direction is one direction from the left side to the right side, when the positive direction of the Y-axis is specified, the direction is one direction from the front side to the rear side, and when the positive direction of the Z-axis is specified, the direction is one direction from the lower side to the upper side. When the negative direction of the X-axis is specified, the direction is one direction from the right side to the left side, when the negative direction of the Y-axis is specified, the direction is one direction from the rear side to the front side, and when the negative direction of the Z-axis is specified, the direction is one direction from the upper side to the lower side.

The self-service POS terminal 1 according to the present embodiment includes a basket tray 2, an item registration unit 3, an item placing unit 4, a lighting unit 51, a monitoring camera 61, and a display device 7. The basket tray 2 is a table on which a basket (not shown) in which an item is stored can be placed. On the basket tray 2, an unread item that has not been read by a scanner 31 to be described later is placed. The basket tray 2 is attached to the item placing unit 4 by an attachment member 21.

The basket tray 2 includes a basket tray surface 22 facing in the positive direction (i.e., upward) of the Z-axis. On the basket tray surface 22, an unread item to be read by the scanner 31 is placed. The basket tray surface 22 is maintained substantially horizontally by the attachment member 21. The basket tray surface 22 has a sufficient size for placing the basket. Note that the basket tray 2 may be a table on which an item can be directly placed without a basket.

Further, the basket tray 2 includes a stopper 23 at a boundary portion with the item placing unit 4. The stopper 23 is formed, for example, by bending a rod-shaped metal into a substantially U-shape, and protrudes upward from the basket tray surface 22 at a substantially end portion on the item placing unit 4 side. The stopper 23 restricts movement of the basket or item placed on the basket tray surface 22 towards the item registration unit 3.

The item registration unit 3 is installed close to the basket tray 2. The item registration unit 3 performs item registration processing and payment processing based on an item code read by the scanner 31 to be described later. The item registration unit 3 includes the scanner 31, a support 32, a display unit 33, a bag packing unit 35, a temporary tray 36, a housing unit 37, a printing unit 38, and a control unit 39.

The support 32 includes two columnar strut members extending in the Z-axis direction (i.e., the vertical direction) . The support 32 is provided in the housing unit 37. Specifically, the support 32 is erected on the rear side of the housing unit 37. Further, the support 32 supports the display unit 33, the bag packing unit 35, the temporary tray 36, the printing unit 38, and a supporting unit 321.

The scanner 31 is attached to the support 32 by the supporting unit 321 protruding from the support 32. Specifically, the scanner 31 is attached to the support 32 by the supporting unit 321 protruding from the support 32 erected on the side of the basket tray 2 toward the side of the basket tray 2. That is, the scanner 31 is provided on the right side (i.e., the basket tray 2 side) of the item registration unit 3.

The scanner 31 reads identification information for identifying an item. Specifically, the scanner 31 includes a reading window 311 for a customer who performs a symbol reading operation. The scanner 31 has a built-in camera (not shown), and reads a symbol attached to an item passing in front of the reading window 311 by the camera. The scanner 31 analyzes or decodes the read symbol to acquire an item code for identifying the item.

The display unit 33 is mounted at an upper position of the support 32 (e.g., a position at a height that is easy for the customer to see), with the display surface facing the customer. The display unit 33 displays information to the customer who operates the self-service POS terminal 1. The display unit 33 acquires the item code read by the scanner 31, and displays the item information (e.g., an item name, a price, and the like) of the item specified by the item code. The display unit 33 is attached to the support 32 so as to be able to adjust the angle in the X-axis direction and the Z-direction so as to be oriented at an angle that is easy for the customer to see depending on the height of the customer's height or the like.

A touch panel 34 is provided on the display surface of the display unit 33. By detecting the position of the touch panel 34 touched by the customer and corresponding to the image of a key displayed on the display unit 33, the touch panel 34 serves as a keyboard capable of accepting an input of the displayed key.

The bag packing unit 35 includes an area for placing an item in a bag (such as a shopping bag, not shown) hung from an extension bar 351 extending substantially horizontally with respect to the negative direction in the Y-axis direction from the support 32. The bag is set to the extension bar 351 by the customer. The bottom surface of the bag is in contact with a bag tray surface 352 in a state of being hung from the extension bar 351. The item read by the scanner 31 is placed on the bag tray surface 352.

The customer puts the item, the symbol of which has been read by the scanner 31 into the bag. The customer confirms that the information of the item read by the scanner 31 is displayed on the display unit 33, and then bags the item. The basket tray surface 22 of the basket tray 2 and the bag tray surface 352 of the bag packing unit 35 are substantially at the same height.

The temporary tray 36 is a table for temporarily placing a fragile item or an easily deformed item (such as a tofu, an egg, bread, or a sashimi platter) among the items, the symbols of which have been read the scanner 31. These items are packed into the bag after the other items have been packed.

The housing unit 37 is provided below the bag packing unit 35 and supports the support 32. Two columnar strut members of the support 32 are erected upward from the upper portion of the rear portion of the housing unit 37. The temporary tray 36, the scanner 31, and the display unit 33 are attached to the support 32 extending along the positive direction of the Z-axis.

The printing unit 38 is a printer that includes, for example, a thermal head, and prints item information and payment information of the item subjected to the payment processing to issue a receipt. The printing unit 38 is attached to the support 32.

The control unit 39 is a controller provided in the housing unit 37. The control unit 39 includes an electric circuit and a power supply unit including a CPU (Central Processing Unit), a ROM (Read Only Memory), a RAM (Random Access Memory, and the like (all of which are not shown) for controlling the self-service POS terminal 1. Note that the control unit 39 may be provided outside the housing unit 37, and may be provided inside the display unit 33, for example.

The item placing unit 4 includes a table of a touch scanner (not shown). The touch scanner has substantially the same function of the scanner 31, and reads a symbol attached to an item. Specifically, the touch scanner emits light from one or more LEDs (Liquid Emitting Diode) to the symbol and receives reflected light by an image sensor to read the symbol.

The item placing unit 4 is interposed between the basket tray 2 and the item registration unit 3. Specifically, the item placing unit 4 is positioned between the basket tray 2 and the item registration unit 3, and is disposed adjacent to or in contact with the basket tray 2 and the item registration unit 3.

The self-service POS terminal 1 further includes a first support member 5, which is a columnar support member extending in the Z-axis direction (i.e., the vertical direction). The first support member 5 is attached to the support 32 by the supporting unit 321 together with the scanner 31. Specifically, the first support member 5 is erected on the back side of the scanner 31, and supports the scanner 31 via the supporting unit 321. In addition, the inside of the first support member 5 is hollow, and wiring (for example, an output cable, an electric cable, or the like) of the monitoring camera 61 or the like is arranged inside.

In the present embodiment, the first support member 5 is attached to the support 32 by the supporting unit 321, but the present invention is not limited thereto. For example, the first support member 5 may be erected from the item registration unit 3 in the same manner as the support 32. Further, for example, the first support member 5 may be erected from the item placing unit 4 extending in the Y-axis direction.

Further, in the present embodiment, the first support member 5 supports the scanner 31 via the supporting unit 321, but the present invention is not limited thereto, and may directly support the scanner 31.

The lighting unit 51 is a lamp provided at an upper end portion of the first support member 5. The lighting unit 51 is a member that emits light when a customer calls a store clerk or the like when an error or the like occurs in the self-service POS terminal 1, and performs notification by light emission. For example, the control unit 39 performs control the lighting unit 51 to issue the notification on the basis of the images captured by the monitoring camera 61, e.g., when a malfunction or an unauthorized operation or the like performed by the customer is detected through the captured images.

The self-service POS terminal 1 transmits, for example, error-like information to an information processing terminal (for example, a personal computer, not shown) operated by a store clerk via a communication unit (not shown). The information processing terminal displays the received information. The store clerk confirms the light emitted by the lighting unit 51 or the information displayed on the information processing terminal, and goes to the corresponding self-service POS terminal 1 to address the issue.

The self-service POS terminal 1 further includes a first extension member 6 attached to an upper end portion of the first support member 5. The first extension member 6 is an extension member or an arm member whose one end side is fixed to the upper end portion of the first support member 5 and whose other end side is extended to the upper portion of the scanner 31. Specifically, the first extension member 6 has an L-shaped shape extending in the positive direction in the Y-axis direction and extending in the negative direction in the Z-axis direction. The inside of the first extension member 6 is hollow, and it is possible to arrange wiring (not shown) of the monitoring camera 61.

FIG. 5 is a diagram illustrating a method of attaching the first extension member 6 to the first support member 5. As shown in FIG. 5, the first support member 5 is provided with a pedestal 52 for fixing the first extension member 6. The first extension member 6 is fastened to the pedestal 52 using, for example, one or more fixing members 62 such as screws.

Here, a cover 53 that covers the back surface of the first support member 5 is provided below the pedestal 52 of the first support member 5. The cover 53 is provided with a first knockout 54 that is formed to be cutaway, and a first opening 56 is formed by cutting the first knockout 54 as shown in FIG. 6. Wiring or the like can be accommodated from the first opening 56.

Further, as shown in FIG. 5, a second knockout 55 formed to be cuttable is provided below the first knockout 54. By cutting the second knockout 55, a second opening 57 is formed as shown in FIG. 6. A second support member 72 for supporting the display device 7, which will be described later, can be attached to the second opening 57.

The second support member 72 is, for example, a substantially U-shaped member whose distal end and distal end extend in the positive direction in the Y-axis direction. A part of the member extending in the Z-axis direction of the second support member 72 is accommodated in the second opening 57 and fixed to the first support member 5.

In the present embodiment, the members forming the first opening 56 and the second opening 57 are knockout members, but the first opening 56 and the second opening 57 may be opened and closed by a detachable member.

Referring back to FIGS. 1 to 4, the monitoring camera 61 is attached to the other end side of the first extension member 6. The monitoring camera 61 captures an image of the customer from above the scanner 31. Specifically, the monitoring camera 61 has an imaging range so as to capture the image of the customer who is taking out an item, using the scanner 31 to read a symbol of the item, bagging the scanned item, and the like.

The monitoring camera 61 captures an image of a customer from above the scanner 31, thereby capturing an image of an operation performed by the customer to retrieve an item from a basket, an operation to read a symbol, an operation to bag an item, and the like. Note that the imaging includes taking a video or continuously capturing still images at predetermined time intervals (for example, every second).

The first support member 5 supports the display device 7 between the lighting unit 51 and the scanner 31. The display device 7 displays an identifier for identifying the self-service POS terminal 1. The display device 7 displays, for example, an ID such as a number for identifying the self-service POS terminal 1. After the store clerk has confirmed the light emission of the lighting unit 51 or the information displayed on the information processing terminal, the store clerk finds the corresponding self-service POS terminal 1 by checking the display device 7, and then goes to the self-service POS terminal 1 and takes appropriate actions.

The display device 7 is, for example, a member made of a substantially rectangular parallelepiped having four surfaces in X and Y axial directions, that is, around the axis of the first support member 5, and opening in the Z-axis direction. The display device 7 is attached to the second support member 72. Specifically, the display device 7 includes a second extension member 71 extending in the negative direction in the Y-axis direction. The second extension member 71 is fixed to the above-described second support member 72 by screwing or the like, and is thus supported between the lighting unit 51 and the scanner 31 by the first support member 5.

Next, the arrangement of the first support member 5, the display device 7, the scanner 31, the lighting unit 51, and the monitoring camera 61 will be described.

As illustrated in FIG. 2, the first support member 5 is disposed between the basket tray 2 and the item registration unit 3 in the front view. That is, the first support member 5 is provided between the basket tray surface 22 on which an item to be read by the scanner 31 is placed and the bag tray surface 352 on which a item that has been read by the scanner 31 is placed. As illustrated in FIG. 2, the monitoring camera 61 is disposed between the basket tray 2 and the item registration unit 3 in the front view. The monitoring camera 61 is provided between the basket tray surface 22 and the bag tray surface 352.

Therefore, the monitoring camera 61 can efficiently capture a series of images showing operations performed by the customer, such as an operation of taking out an item from the basket, an operation of reading a symbol, and an operation of bagging an item. In addition, the monitoring camera 61 can monitor an operation performed by the customer, such as an erroneous operation or an unauthorized operation.

Further, as shown in FIG. 2, the display device 7, the scanner 31, the lighting unit 51, and the monitoring camera 61 are arranged on the same straight line in the order of the scanner 31, the display device 7, the lighting unit 51, and the monitoring camera 61 in the positive direction in the Z-axis direction in the front view. That is, the scanner 31, the display device 7, and the lighting unit 51 are located below the monitoring camera 61. The display device 7 is located between the lighting unit 51 and the scanner 31. Further, in the side view as shown in FIG. 3, the monitoring camera 61 is positioned in front of the scanner 31 (i.e., in the negative direction of the Y-axis direction).

By disposing the monitoring camera 61 above the lighting unit 51, for example, the self-service POS terminal 1 can capture an image showing the status when an error or the like occurs. In addition, the monitoring camera 61 is arranged above the display device 7 to capture the image further showing the ID of the self-service POS terminal 1. Further, the monitoring camera 61 is disposed above the scanner 31, so that, for example, the image showing the operation of the customer can be captured.

As described above, the self-service POS terminal 1 according to the present embodiment includes the monitoring camera 61 on the upper end of the support member 5 and captures an image of the customer from above the scanner 31. As a result, the self-service POS terminal 1 according to the present embodiment can efficiently monitor the customer's operations.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure as defined by the appended claims.

## Claims

1. A reading device (1), comprising:
a first support member (5) extending vertically (Z);
a scanner (31) attached to the first support member (5) and including a window (311) facing a first direction (Y) and through which an item can be scanned by an operator;
the reading device (1) further comprises:
an extension member (6) attached to an upper portion of the first support member (5) and extending in the first direction (Y) above the scanner (31);
a camera (61) attached to an end of the extension member (6) in the first direction (Y) and configured to capture an image of the operator; and
a controller (39) configured to issue a notification signal when the controller (39) detects from the captured image that the operator is carrying out a predetermined operation.

2. The reading device (1) according to claim 1, further comprising:
a lamp (51) attached to the first support member (5) at a height lower than the camera (61) and configured to emit light when the notification signal is issued.

3. The reading device (1) according to claim 2, wherein the camera (61), the lamp (51), and the scanner (31) are arranged in a straight line.

4. The reading device (1) according to claim 2 or 3, further comprising:
a display device (7) attached to the first support member (5) between the lamp (51) and the scanner (31) and configured to display identification information of the reading device.

5. The reading device (1) according to claim 4, wherein the first support member (5) has an opening (57) into which a second support member (72) for attaching the display device (7) to the first support member (5) can be inserted.

6. The reading device (1) according to claim 4 or 5, wherein the camera (61) is configured to capture an image of the operator, the lamp (51), and the display device (7).

7. The reading device (1) according to any of claims 1 to 6, further comprising:
a first table (2) on which an item to be scanned by the scanner (31) can be placed; and
a second table (352) on which an item that has been scanned by the scanner (31) can be placed.

8. The reading device (1) according to any of claims 1 to 7, wherein
the camera (61) is between the first and second tables (2/352) when viewed from above, and/or
the camera (61) faces downward.

9. The reading device (1) according to any of claims 1 to 8, wherein the first support member (5) includes a pedestal (52) to which a lower end of the extension member (6) is attached by a screw.

10. A self-service point-of-sales (POS) terminal (1), comprising:
a first support member (5) extending vertically (Z);
a scanner (31) attached to the first support member (5) and including a window (311) facing a first direction (Y) and through which an item can be scanned by a customer;
the POS terminal (1) further comprises:
an extension member (6) attached to an upper portion of the first support member (5) and extending in the first direction (Y) above the scanner (31);
a camera (61) attached to an end of the extension member (6) in the first direction (Y) and configured to capture an image of the customer; and
a controller (39) configured to register the scanned item for purchase, wherein
the controller (39) is further configured to issue a notification signal when the controller (39) detects from the captured image that the customer is carrying out a predetermined operation.

11. The POS terminal (1) according to claim 10, further comprising:
a lamp (51) attached to the first support member (5) at a height lower than the camera (61) and configured to emit light when the notification signal is issued.

12. The POS terminal (1) according to claim 11, wherein the camera (61), the lamp (51), and the scanner (31) are arranged in a straight line.

13. The POS terminal (1) according to claim 11 or 12, further comprising:
a display device (7) attached to the first support member (5) between the lamp (51) and the scanner (31) and configured to display identification information of the POS terminal (1) .

14. The POS terminal (1) according to claim 13, wherein
the first support member (5) has an opening (57) into which a second support member (72) for attaching the display device (7) to the first support member (5) can be inserted, and/or wherein
the camera (61) is configured to capture an image of the customer, the lamp (51), and the display device (7).

15. The POS terminal (1) according to any of claims 10 to 14, further comprising:
a first table (2) on which an item to be scanned by the scanner (31) can be placed; and
a second table (352) on which an item that has been scanned by the scanner (31) can be placed; the POS terminal (1) preferably comprising:
a pair of extension bars (351) from which a shopping bag is hung, wherein
the camera (61) is configured to capture an image of the customer, the first and second tables (2/352), and the shopping bag; the POS terminal (1) further preferably comprising:
a third table (36) above the second table (352) on which an item that has been scanned by scanner (31) can be placed, wherein
the extension bars (351) extend from the third table (36) in the first direction (Y); the POS terminal (1) further preferably comprising:
a printer (38) configured print a receipt on which information about the registered item is printed, wherein
the third table (36) is between the scanner (31) and the printer (38).

## Patentansprüche

1. Lesevorrichtung (1), umfassend:
ein erstes Stützelement (5), das sich vertikal (Z) erstreckt;
einen Scanner (31), der am ersten Stützelement (5) angebracht ist und ein Fenster (311) einschließt, das in eine erste Richtung (Y) weist und durch das ein Artikel von einem Bediener gescannt werden kann;
wobei die Lesevorrichtung (1) weiter umfasst:
ein Verlängerungselement (6), das an einem oberen Abschnitt des ersten Stützelements (5) angebracht ist und sich in die erste Richtung (Y) über dem Scanner (31) erstreckt;
eine Kamera (61), die an einem Ende des Verlängerungselements (6) in der ersten Richtung (Y) angebracht ist und ausgebildet ist, um ein Bild des Bedieners aufzunehmen; und
eine Steuereinheit (39), die ausgebildet ist, um ein Benachrichtigungssignal auszugeben, wenn die Steuereinheit (39) aus dem aufgenommenen Bild erkennt, dass der Bediener einen vorbestimmten Vorgang durchführt.

2. Lesevorrichtung (1) nach Anspruch 1, weiter umfassend:
eine Lampe (51), die am ersten Stützelement (5) in einer Höhe angebracht ist, die niedriger ist als die Kamera (61), und die ausgebildet ist, um Licht auszustrahlen, wenn das Benachrichtigungssignal ausgegeben wird.

3. Lesevorrichtung (1) nach Anspruch 2, wobei die Kamera (61), die Lampe (51) und der Scanner (31) in einer geraden Linie angeordnet sind.

4. Lesevorrichtung (1) nach Anspruch 2 oder 3, weiter umfassend:
eine Anzeigevorrichtung (7), die am ersten Stützelement (5) zwischen der Lampe (51) und dem Scanner (31) angebracht ist und ausgebildet ist, um Identifizierungsinformationen der Lesevorrichtung anzuzeigen.

5. Lesevorrichtung (1) nach Anspruch 4, wobei das erste Stützelement (5) eine Öffnung (57) aufweist, in die ein zweites Stützelement (72) zum Anbringen der Anzeigevorrichtung (7) am ersten Stützelement (5) eingeführt werden kann.

6. Lesevorrichtung (1) nach Anspruch 4 oder 5, wobei die Kamera (61) ausgebildet ist, um ein Bild des Bedieners, der Lampe (51) und der Anzeigevorrichtung (7) aufzunehmen.

7. Lesevorrichtung (1) nach einem der Ansprüche 1 bis 6, weiter umfassend:
einen ersten Tisch (2), auf dem ein von dem Scanner (31) zu scannender Artikel gelegt werden kann; und
einen zweiten Tisch (352), auf dem ein von dem Scanner (31) gescannter Artikel gelegt werden kann.

8. Lesevorrichtung (1) nach einem der Ansprüche 1 bis 7, wobei
die Kamera (61) von oben betrachtet zwischen dem ersten und dem zweiten Tisch (2/352) gelegen ist, und/oder
die Kamera (61) nach unten gerichtet ist.

9. Lesevorrichtung (1) nach einem der Ansprüche 1 bis 8, wobei das erste Stützelement (5) einen Sockel (52) einschließt, an dem ein unteres Ende des Verlängerungselements (6) mittels einer Schraube angebracht ist.

10. Selbstbedienungsterminal (1) für Verkaufsstellen (POS), umfassend:
ein erstes Stützelement (5), das sich vertikal (Z) erstreckt;
einen Scanner (31), der am ersten Stützelement (5) angebracht ist und ein Fenster (311) einschließt, das in eine erste Richtung (Y) weist und durch das ein Artikel von einem Kunden gescannt werden kann;
wobei der POS-Terminal (1) weiter umfasst:
ein Verlängerungselement (6), das an einem oberen Abschnitt des ersten Stützelements (5) angebracht ist und sich in die erste Richtung (Y) über dem Scanner (31) erstreckt;
eine Kamera (61), die an einem Ende des Verlängerungselements (6) in der ersten Richtung (Y) angebracht ist und ausgebildet ist, um ein Bild des Kunden aufzunehmen; und
eine Steuereinheit (39), die ausgebildet ist, um den gescannten Artikel für den Verkauf zu erfassen, wobei
die Steuereinheit (39) weiter ausgebildet ist, um ein Benachrichtigungssignal auszugeben, wenn die Steuereinheit (39) aus dem aufgenommenen Bild erkennt, dass der Kunde einen vorbestimmten Vorgang durchführt.

11. POS-Terminal (1) nach Anspruch 10, weiter umfassend:
eine Lampe (51), die am ersten Stützelement (5) in einer Höhe angebracht ist, die niedriger ist als die Kamera (61), und die ausgebildet ist, um Licht auszustrahlen, wenn das Benachrichtigungssignal ausgegeben wird.

12. POS-Terminal (1) nach Anspruch 11, wobei die Kamera (61), die Lampe (51) und der Scanner (31) in einer geraden Linie angeordnet sind.

13. POS-Terminal (1) nach Anspruch 11 oder 12, weiter umfassend:
eine Anzeigevorrichtung (7), die am ersten Stützelement (5) zwischen der Lampe (51) und dem Scanner (31) angebracht ist und ausgebildet ist, um Identifizierungsinformationen des POS-Terminals (1) anzuzeigen.

14. POS-Terminal (1) nach Anspruch 13, wobei
das erste Stützelement (5) eine Öffnung (57) aufweist, in die ein zweites Stützelement (72) zum Anbringen der Anzeigevorrichtung (7) am ersten Stützelement (5) eingeführt werden kann, und/oder wobei
die Kamera (61) ausgebildet ist, um ein Bild des Kunden, der Lampe (51) und der Anzeigevorrichtung (7) aufzunehmen.

15. POS-Terminal (1) nach einem der Ansprüche 10 bis 14, weiter umfassend:
einen ersten Tisch (2), auf dem ein von dem Scanner (31) zu scannender Artikel gelegt werden kann; und
einen zweiten Tisch (352), auf dem ein von dem Scanner (31) gescannter Artikel gelegt werden kann; wobei der POS-Terminal (1) vorzugsweise umfasst:
ein Paar Verlängerungsstäbe (351), an denen eine Einkaufstüte aufgehängt wird, wobei
die Kamera (61) ausgebildet ist, um ein Bild des Kunden, des ersten und zweiten Tisches (2/352) und der Einkaufstüte aufzunehmen, wobei der POS-Terminal (1) weiter vorzugsweise umfasst:
einen dritten Tisch (36) über dem zweiten Tisch (352), auf dem ein von dem Scanner (31) gescannter Artikel gelegt werden kann, wobei
die Verlängerungsstäbe (351) sich von dem dritten Tisch (36) in die erste Richtung (Y) erstrecken, wobei der POS-Terminal (1) weiter vorzugsweise umfasst:
einen Drucker (38), der ausgebildet ist, um einen Kassenzettel zu drucken, auf dem Informationen über den erfassten Artikel gedruckt sind, wobei
der dritte Tisch (36) zwischen dem Scanner (31) und dem Drucker (38) gelegen ist.

## Revendications

1. Dispositif de lecture (1), comprenant :
un premier élément de support (5) s'étendant verticalement (Z) ;
un scanner (31) fixé au premier élément de support (5) et incluant une fenêtre (311) faisant face à une première direction (Y) et à travers laquelle un article peut être scanné par un opérateur ;
le dispositif de lecture (1) comprend en outre :
un élément d'extension (6) fixé à une partie supérieure du premier élément de support (5) et s'étendant dans la première direction (Y) au-dessus du scanner (31) ;
un appareil de prise de vues (61) fixé à une extrémité de l'élément d'extension (6) dans la première direction (Y) et configuré pour capturer une image de l'opérateur ; et
un dispositif de commande (39) configuré pour délivrer un signal de notification lorsque le dispositif de commande (39) détecte, à partir de l'image capturée, que l'opérateur met en œuvre une opération prédéterminée.

2. Dispositif de lecture (1) selon la revendication 1, comprenant en outre :
une lampe (51) fixée au premier élément de support (5) à une hauteur inférieure à l'appareil de prise de vues (61) et configurée pour émettre une lumière lorsque le signal de notification est délivré.

3. Dispositif de lecture (1) selon la revendication 2, dans lequel l'appareil de prise de vues (61), la lampe (51) et le scanner (31) sont agencés en une ligne droite.

4. Dispositif de lecture (1) selon la revendication 2 ou 3, comprenant en outre :
un dispositif d'affichage (7) fixé au premier élément de support (5) entre la lampe (51) et le scanner (31) et configuré pour afficher des informations d'identification du dispositif de lecture.

5. Dispositif de lecture (1) selon la revendication 4, dans lequel le premier élément de support (5) présente une ouverture (57) dans laquelle un deuxième élément de support (72) pour la fixation du dispositif d'affichage (7) au premier élément de support (5) peut être inséré.

6. Dispositif de lecture (1) selon la revendication 4 ou 5, dans lequel l'appareil de prise de vues (61) est configuré pour capturer une image de l'opérateur, de la lampe (51) et du dispositif d'affichage (7).

7. Dispositif de lecture (1) selon l'une quelconque des revendications 1 à 6, comprenant en outre :
une première table (2) sur laquelle un article devant être scanné par le scanner (31) peut être placé ; et
une deuxième table (352) sur laquelle un article qui a été scanné par le scanner (31) peut être placé.

8. Dispositif de lecture (1) selon l'une quelconque des revendications 1 à 7, dans lequel
l'appareil de prise de vues (61) est entre les première et deuxième tables (2/352) lorsqu'on l'observe par le dessus, et/ou
l'appareil de prise de vues (61) fait face vers le bas.

9. Dispositif de lecture (1) selon l'une quelconque des revendications 1 à 8, dans lequel le premier élément de support (5) inclut un socle (52) auquel une extrémité inférieure de l'élément d'extension (6) est fixée par une vis.

10. Terminal (1) de point de vente (POS) en libre-service, comprenant :
un premier élément de support (5) s'étendant verticalement (Z) ;
un scanner (31) fixé au premier élément de support (5) et incluant une fenêtre (311) faisant face à une première direction (Y) et à travers laquelle un article peut être scanné par un client ;
le terminal (1) de POS comprend en outre :
un élément d'extension (6) fixé à une partie supérieure du premier élément de support (5) et s'étendant dans la première direction (Y) au-dessus du scanner (31) ;
un appareil de prise de vues (61) fixé à une extrémité de l'élément d'extension (6) dans la première direction (Y) et configuré pour capturer une image du client ; et
un dispositif de commande (39) configuré pour enregistrer l'article scanné à l'achat, dans lequel
le dispositif de commande (39) est en outre configuré pour délivrer un signal de notification lorsque le dispositif de commande (39) détecte, à partir de l'image capturée, que le client met en œuvre une opération prédéterminée.

11. Terminal (1) de POS selon la revendication 10, comprenant en outre :
une lampe (51) fixée au premier élément de support (5) à une hauteur inférieure à l'appareil de prise de vues (61) et configurée pour émettre une lumière lorsque le signal de notification est délivré.

12. Terminal (1) de POS selon la revendication 11, dans lequel l'appareil de prise de vues (61), la lampe (51) et le scanner (31) sont agencés en une ligne droite.

13. Terminal (1) de POS selon la revendication 11 ou 12, comprenant en outre :
un dispositif d'affichage (7) fixé au premier élément de support (5) entre la lampe (51) et le scanner (31) et configuré pour afficher des informations d'identification du terminal (1) de POS.

14. Terminal (1) de POS selon la revendication 13, dans lequel
le premier élément de support (5) présente une ouverture (57) dans laquelle un deuxième élément de support (72) pour la fixation du dispositif d'affichage (7) au premier élément de support (5) peut être inséré, et/ou dans lequel
l'appareil de prise de vues (61) est configuré pour capturer une image du client, de la lampe (51) et du dispositif d'affichage (7).

15. Terminal (1) de POS selon l'une quelconque des revendications 10 à 14, comprenant en outre :
une première table (2) sur laquelle un article devant être scanné par le scanner (31) peut être placé ; et
une deuxième table (352) sur laquelle un article qui a été scanné par le scanner (31) peut être placé ; le terminal (1) de POS comprenant de préférence :
une paire de barres d'extension (351) à partir desquelles un sac de courses est suspendu, dans lequel
l'appareil de prise de vues (61) est configuré pour capturer une image du client, des première et deuxième tables (2/352), et du sac de courses ; le terminal (1) de POS comprenant en outre de préférence :
une troisième table (36) au-dessus de la deuxième table (352) sur laquelle un article qui a été scanné par le scanner (31) peut être placé, dans lequel
les barres d'extension (351) s'étendent à partir de la troisième table (36) dans la première direction (Y) ; le terminal (1) de POS comprenant en outre de préférence :
une imprimante (38) configurée pour imprimer un reçu sur lequel des informations concernant l'article enregistré sont imprimées, dans lequel
la troisième table (36) est entre le scanner (31) et l'imprimante (38).
